# EUROPÄISCHE PATENTSCHRIFT

(11) **EP 3 021 066 B1**
(45) Veröffentlichungstag und Bekanntmachung des Hinweises auf die Patenterteilung: **06.03.2019**
(21) Anmeldenummer: 15191567.5
(22) Anmeldetag: 27.10.2015
(51) Int. Cl.: F28D 20/00

(54) **VERFAHREN ZUR NUTZUNG VON IN EINER ANLAGE ANFALLENDER WÄRME**
METHOD FOR USING HEAT GENERATED IN A PLANT
PROCÉDÉ D'UTILISATION DE LA CHALEUR GÉNÉRÉE DANS UNE INSTALLATION

(30) Priorität: 17.11.2014 DE 102014223402
(43) Veröffentlichungstag der Anmeldung: 18.05.2016
(73) Patentinhaber: HIC Hamburg Institut Consulting GmbH, 22765 Hamburg (DE)
(72) Erfinder: Sandrock, Matthias, 21129 Hamburg (DE)
(74) Vertreter: Müller Verweyen

(56) Entgegenhaltungen:
- WO-A1-2012/101110
- DE-A1- 19 922 696
- GB-A- 2 252 817

## Beschreibung

Die vorliegende Erfindung betrifft ein Verfahren zur Nutzung von in einer Anlage anfallender Wärme.

Es ist bekannt, in industriellen Anlagen, beispielsweise Kraftwerken, anfallende Abwärme in ein Fernwärmenetz einzuspeisen, um die thermische Energie zum Heizen und für die Bereitstellung von Warmwasser in Gebäuden zu nutzen. Jedoch liegen manche industriellen Anlagen nicht in der Nähe eines Fernwärmenetzes, wobei die Verlegung sowie der Betrieb von Rohrleitungen zum Transport der Abwärme von der Anlage zu dem Fernwärmenetz nicht immer wirtschaftlich möglich sind. In diesen Fällen wird die Abwärme häufig in die Umwelt abgegeben, so dass die thermische Energie nicht nur verloren ist, sondern im Gegenteil sogar umweltschädlich wirkt.

G. Storch und A. Hauer, "Abwärmenutzung durch Wärmenutzung mit mobilen Sorptionsspeichern", ZAE Bayern, DPG Jahrestagung 2006, beschreiben ein Verfahren zum Speichern und Transport von Wärme in Zeolith-gefüllten Standard-Frachtcontainern auf LKWs, das sich jedoch in der Praxis nicht etablieren konnte.

GB 2 252 817 A offenbart ein Verfahren zur Nutzung von in einer Wärmequelle anfallender Wärme nach dem Oberbegriff von Anspruch 1.

DE 199 22 696 A1 offenbart den Wärmetransport mittels eines mobilen Latentwärmespeichers von einem Kraftwerk zu einer Abnahmestelle beispielweise per Schiff.

WO 2012/101110 A1 offenbart den Transport von thermo-chemisch gespeicherter Wärme mittels Container oder einem Schüttgutfrachter.

Die Aufgabe der Erfindung besteht darin, ein wirtschaftliches Verfahren zur flexiblen Nutzung von in einer Anlage anfallender Wärme bereitzustellen.

Die Erfindung löst diese Aufgabe mit den Merkmalen des unabhängigen Anspruchs. Mittels des erfindungsgemäß verwendeten schwimmenden Transportmittels können vergleichsweise sehr große Wärmemengen auf einmal transportiert werden, was die Umweltbilanz und die Wirtschaftlichkeit des Transports gegenüber dem Straßentransport signifikant verbessert. Im Verhältnis zu einer fest verlegten Rohrleitung ist die Erfindung wesentlich flexibler, weil ein dauerhafter Wärmeanfall in einer Anlage oft nicht garantiert und eine fest verlegte Rohrleitung damit nutzlos werden kann. Die Erfindung kann für sämtlich große Wärmemengen produzierenden Anlagen vorteilhaft eingesetzt werden, die eine Anbindung an ein schiffbares Gewässer haben oder errichten können.

In einer vorteilhaften Anwendung der Erfindung ist der Wärmeabnehmer ein Wärmenetz, insbesondere ein Fernwärmenetz. Die Erfindung ist aber nicht auf diese Anwendung beschränkt. In anderen möglichen Anwendungen kann der Wärmeabnehmer ein geschlossener Wärmekreislauf, ein lokaler Wärmeverbraucher oder ein Wärmespeicherbehälter sein. Die Erfindung ist auch dort vorteilhaft einsetzbar, wo ein langfristiges Wärmeangebot nicht gesichert ist.

Die Wärme wird erfindungsgemäß unter Nutzung von Wasser als Wärmemedium verschifft. Die Erfindung ist bereits für Abwärmetemperaturen des Wassers von mindestens 40 °C anwendbar. Das Wärmemedium weist vorzugsweise eine Temperatur von mindestens 80 °C, weiter vorzugsweise mindestens 90 °C, noch weiter vorzugsweise mindestens 100 °C auf, um ohne weitere Erwärmung für die Abgabe der Wärme in ein Fernwärmenetz geeignet zu sein.

Erfindungsgemäß ist das Wärmemedium Wasser. Wasser ist ein sehr kostengünstiges Wärmemedium mit einer sehr hohen Wärmekapazität. Zudem fällt in vielen industriellen Anlagen Abwärme in Form von heißem Wasser an, so dass die Wärme entweder direkt durch Einfüllen des heißen Wassers, oder indirekt über einen Wärmetauscher, auf einfache Weise und mit hohem Wirkungsgrad an das schwimmende Transportmittel übertragbar ist.

In einer Variante der Erfindung wird Wärmemedium nur in einer Richtung von der Anlage zu dem Wärmeabnehmer transportiert. Dies ist beispielsweise vorteilhaft, wenn der Wärmeabnehmer ein Fernwärmenetz ist, das eingerichtet ist, um anfallendes Rücklaufmedium vom Verbraucher selbst zu entsorgen, und hat dann den Vorteil, dass ein kostenträchtiger Rücktransport des Wärmemediums entfallen kann. In einer anderen vorteilhaften Variante der Erfindung wird Wärmemedium in beiden Richtungen von der Anlage zu dem Wärmeabnehmer und zurück transportiert. Dies ist beispielsweise vorteilhaft, wenn bei dem Wärmeabnehmer ein Rücklaufmedium anfällt, das dort nicht entsorgt werden kann, oder wenn es sich abnahmeseitig um ein geschlossenes System handelt, das indirekt über Wärmetauscher mit Wärme beaufschlagt wird. In dieser Variante bezieht sich der Wärmetransport vorteilhaft sowohl auf die Lieferung von Wärme in Vorlauftemperatur als auch in Rücklauftemperatur, also nach Wiederaufnahme aus dem Wärmenetz, in welches eingespeist wurde.

Das schwimmende Transportmittel ist erfindungsgemäß ein Tankschiff. Das schwimmende Transportmittel umfasst Leichter, Schuten, Ewer, schwimmende Plattformen, Barkassen, sämtliche jeweils motorisiert und nicht motorisiert. Das schwimmende Transportmittel wird für den Wärmetransport speziell ausgerüstet oder umgebaut. Insbesondere umfasst das schwimmende Transportmittel vorteilhaft einen oder mehrere Tanks, die entweder, wie in einem Tankleichter, als Teil des Schiffes bereits fest eingebaut sind, oder als Tankbehälter nachträglich auf dem schwimmenden Transportmittel montiert oder transportiert werden. Demnach ist der Tankraum vorteilhaft fest in das Tankschiff eingebaut oder in bzw. auf diesem montiert. Der Tankraum ist somit ein Teil des Tankschiffs. Erfindungsgemäß besteht der Tankraum als Laderaum aus mindestens einem als Teil des Tankschiffs fest eingebauten oder fest montierten Tank oder Tankbehälter. Fest eingebaut oder fest montiert bedeutet, dass der Tankraum bzw. Tank bzw. Tankbehälter mit Verbindungsmitteln wie beispielsweise Schrauben dauerhaft und unlösbar, oder nur mit hohem Aufwand lösbar, mit dem Schiff verbunden ist. Im Gegensatz dazu sind Container üblicherweise mittels schnell lösbaren Containerverbindern, insbesondere Formschlussverbindern (Twistlocks) mit dem Schiff verbunden. In vielen Fällen ist der Tankraum bzw. sind die Tanks oder Tankbehälter vollständig unter Deck des Tankschiffs fest eingebaut oder montiert.

Das schwimmende Transportmittel weist vorteilhaft Anschlüsse zum Anschließen flexibler Leitungen auf, die zur Aufnahme und Abgabe von flüssigen oder gasförmigen Medien in direkter stofflicher Form oder indirekt über Wärmetauscher ermöglichen.

Wärmetauscher können auf oder an dem schwimmenden Transportmittel oder kaiseitig an der jeweiligen Anlegestelle montiert sein. Das schwimmende Transportmittel bzw. das Tankschiff weist erfindungsgemäß mindestens einen Anschluss zum Befüllen und/oder Entladen des Tankraums auf.

Das schwimmende Transportmittel weist vorteilhaft eine Wärmedämmung auf, um Wärmeverluste des transportierten Wärmemediums möglichst weitgehend zu vermeiden. Vorzugsweise ist das schwimmende Transportmittel am Außenrumpf und/oder am Ladedeck, insbesondere auch an den Ladedeckeln, wärmeisoliert. Vorzugsweise ist die Wärmedämmung des Laderaums so dimensioniert, dass das Wärmemedium über einen Zeitraum von einer Stunde um nicht mehr als 1 °C, weiter vorzugsweise um nicht mehr als 0,5 °C, noch weiter vorzugsweise um nicht mehr als 0,2 °C, besonders vorteilhaft um nicht mehr als 0,1 °C abkühlt.

Vorzugsweise weist das schwimmende Transportmittel eine an der Innenseite des Außenrumpfes angeordnete Innenschale auf, um einen wärmeisolierenden Zwischenraum zwischen dem Außenrumpf und der Inneschale zu bilden. In den Zwischenraum ist vorzugsweise ein Isolationsmittel eingebracht, insbesondere solche Dämmstoffe, die für die Dämmung von Hohlräumen geeignet sind, beispielsweise Granulate oder Schäume aus Polystyrol, Polyurethan, Mineralwolle, Steinwolle, Perlite, Kork, Paraffine oder Aerogele. In dem Zwischenraum wird wahlweise ein Über- oder Unterdruck erzeugt, mit dem Wärmeverluste beispielsweise durch Luftströmungen vermieden werden können. Auch eine Evakuierung des Zwischenraums gegen Wärmeverluste (Vakuumdämmung) kann vorteilhaft vorgesehen sein. Werden nachträglich einzelne Transportbehälter eingesetzt, die im Laderaum oder auf Ladeplattformen transportiert werden, werden diese ebenfalls vorteilhaft wärmeisoliert.

Die Erfindung wird im Folgenden anhand bevorzugter Ausführungsformen unter Bezugnahme auf die beigefügten Figuren erläutert. Dabei zeigen die Figuren unterschiedliche Ausführungsformen eines Systems, worauf sich das erfindungsgemäße Verfahren zur Nutzung von Wärme stützt.

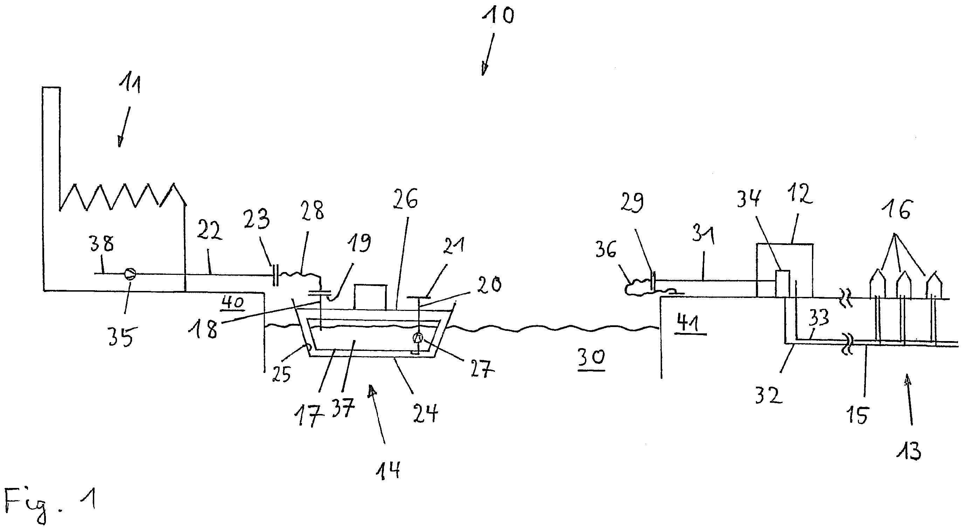

Ein System 10 zur Nutzung von Wärme gemäß Fig. 1 umfasst eine Wärme abgebende Anlage 11, insbesondere eine Industrieanlage, einen Wärmeabnehmer 12, der hier beispielsweise Teil eines Fernwärmenetzes 13 ist, aber beispielsweise auch ein großer Einzelabnehmer ohne angeschlossenes Fernwärmenetz 13 sein kann, und ein schwimmendes Transportmittel 14, hier ein Tankschiff, beispielsweise ein Tankleichter. Die Anlage 11 und der Wärmeabnehmer 12 sind in der Nähe eines schiffbaren Gewässers 30 gelegen.

Die Industrieanlage 11 gibt heißes Wasser 38 über eine Verbindungsleitung 22 an einen Ausspeiseanschluss 23 ab, der an einem anlageseitigen Anleger 40 angeordnet ist. In der Verbindungsleitung 22 ist vorteilhaft eine Pumpe 35 zur Förderung des heißen Wassers durch die Verbindungsleitung 22 zu dem Ausspeiseanschluss 23 vorgesehen. Die Temperatur des abzugebenden Wassers liegt über 40 °C, vorzugsweise über 80 °C, weiter vorzugsweise über 90 °C, noch weiter vorzugsweise über 100 °C, beispielsweise im Bereich zwischen 130 °C und 150 °C. Wenn die Abgabetemperatur über 100 °C liegt, kann das Abgabemedium vorteilhaft Wasser mit siedepunkterhöhenden Zusätzen oder druckbeaufschlagtes Wasser sein.

Das Tankschiff 14 umfasst einen Laderaum 17, hier einen Tankraum, der zur Aufnahme eines insbesondere flüssigen Wärmemediums eingerichtet ist und insbesondere aus einem oder mehreren Tanks bestehen kann. Das Volumen des Tankraums 17 beträgt mindesten 50%, vorzugsweise mindestens 80% des Volumens des Tankschiffs 14 vorzugsweise des Außenrumpfes 24. Das Tankschiff 14 umfasst einen Einlass 18 mit einem Einlassanschluss 19 zum Befüllen des Laderaums 17 und einen Auslass 20 mit einem Auslassanschluss 21 zum Entladen des Laderaums 17. In dem Auslass 20 ist vorteilhaft eine Pumpe 27 zum Ausfördern des Wärmemediums aus dem Tankraum 17 durch den Auslass 20 vorgesehen. Es ist denkbar, dass anstelle separater Ein- und Auslässe 18, 20 nur ein Anschluss vorgesehen ist, der sowohl zum Befüllen als auch zum Entladen des Laderaums 17 verwendet wird. Das Tankschiff 14 weist einen doppelwandigen Außenrumpf 24 auf, wobei der Zwischenraum zwischen der Innenschale 25 mit einem geeigneten Dämmmaterial verfüllt oder evakuiert ist, um die Wärmeverluste zu minimieren. Auch das Ladedeck 26 des Tankschiffs 14 weist vorzugsweise eine Wärmeisolierung auf. Des Weiteren ist eine insbesondere flexible Verbindungsleitung 28, insbesondere eine Schlauchleitung, vorgesehen, um den Ausspeiseanschluss 23 der Anlage 11 mit dem Einlassanschluss 19 des Tankschiffs 14 verbinden zu können.

Das Fernwärmenetz 13 ist in der üblichen Bedeutung des Begriffs ein Wärmenetz, das eine Vielzahl von Gebäuden 16 über ein meist unterirdisches Netzwerk aus wärmegedämmten Rohrleitungen 15 mit Vorlauf 32 und Rücklauf 33 an eine Wärmequelle 12 anbindet, um die Gebäude 16 zu heizen bzw. darin warmes Wasser bereitzustellen. Der Wärmeabnehmer 12 umfasst eine mit dem Vorlauf 32 des Fernwärmenetzes 13 verbundene Einspeisevorrichtung 34. Der Wärmeabnehmer 12 bzw. die Einspeisevorrichtung 34 ist mittels einer Verbindungsleitung 31 mit einem Einspeiseanschluss 29 verbunden, der an einem abnehmerseitigen Anleger 41 angeordnet ist.

Im Folgenden wird der Ablauf des Verfahrens zur Nutzung der in der Anlage 11 gemäß Fig. 1 anfallenden Wärme erläutert. Der Einlassanschluss 19 des unbeladenen Tankschiffs 14 wird mit dem Ausspeiseanschluss 23 der Anlage 11 mittels der Schlauchleitung 28 verbunden. Die in der Anlage 11 anfallende heiße Flüssigkeit wird mittels der Pumpe 35 über die Verbindungsleitung 22, die Schlauchleitung 28 und den Einlass 18 direkt in den Tankraum 17 des Tankschiffs 14 eingefüllt, bis das Tankschiff 14 vollständig befüllt ist. In der Ausführungsform gemäß Fig. 1 bildet demnach die von der Anlage 11 abgegebene heiße Flüssigkeit das mit dem Tankschiff 14 zu transportierende Wärmemedium 37. Anschließend wird die Verbindung zwischen dem Ausspeiseanschluss 23 und dem Tankschiff 14 beispielsweise an dem Einlassanschluss 19 gelöst. Das Tankschiff 14 legt von der Anlage 11 ab und fährt über das Gewässer 30 zu dem Wärmeabnehmer 12, wo es anlegt. Sodann wird der Auslassanschluss 21 des Tankschiffs 14 mit dem Einspeiseanschluss 29 mittels einer flexiblen Leitung 36, insbesondere einer Schlauchleitung, verbunden. Das Wärmemedium 37 wird danach mittels der Pumpe 27 über den Auslass 20, die Schlauchleitung 36 und die Verbindungsleitung 31 zu dem Wärmeabnehmer 12 transportiert und von dort, gegebenenfalls nach Zwischenspeicherung, in den Vorlauf 32 des Fernwärmenetzes 13 eingespeist.

Vorteilhaft umfasst das System 10 eine Mehrzahl von Tankschiffen 14, um eine im Wesentlichen unterbrechungslose Wärmeübertragung zu ermöglichen.

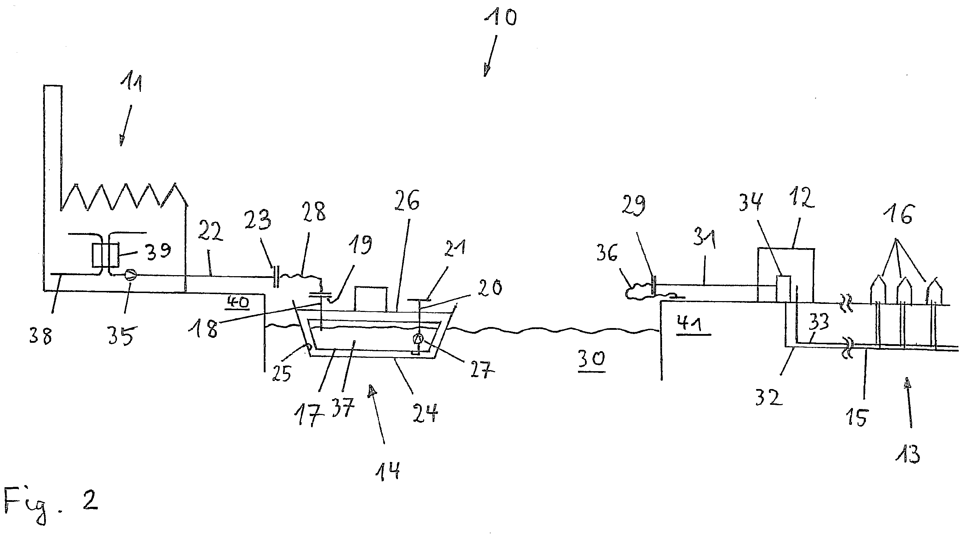

In der Ausführungsform gemäß Fig. 2 wird das in der Anlage 11 anfallende heiße Medium 38 nicht direkt in den Tankraum 17 des Tankschiffes 14 verfüllt, sondern in einem Wärmetauscher 39, der hier in der Anlage 11 angeordnet ist, an das Wärmemedium 37 abgegeben, das erfindungsgemäß Wasser ist. Diese Ausführungsform kann beispielsweise zweckmäßig sein, wenn das in der Anlage 11 anfallende heiße Medium 38 ein heißes Gas oder eine zum Transport oder zur Verwendung in dem Wärmeabnehmer 12 ungeeignete Flüssigkeit ist, oder die Wärmekreisläufe von wärmeabgebender Anlage 11 als geschlossenes System betrieben wird.

In weiteren, nicht gezeigten Ausführungsformen kann anstelle oder zusätzlich zu dem Wärmetauscher 39 ein Wärmetauscher am oder in dem Wärmeabnehmer 12 und/oder an oder auf dem schwimmenden Transportmittel 14 vorgesehen sein. Wärmetauscher können allgemein vorteilhaft sein, wenn die Wärmekreisläufe von wärmeabgebender Anlage 11 und/oder wärmeabgebender Anlage 12 als geschlossenes System betrieben werden.

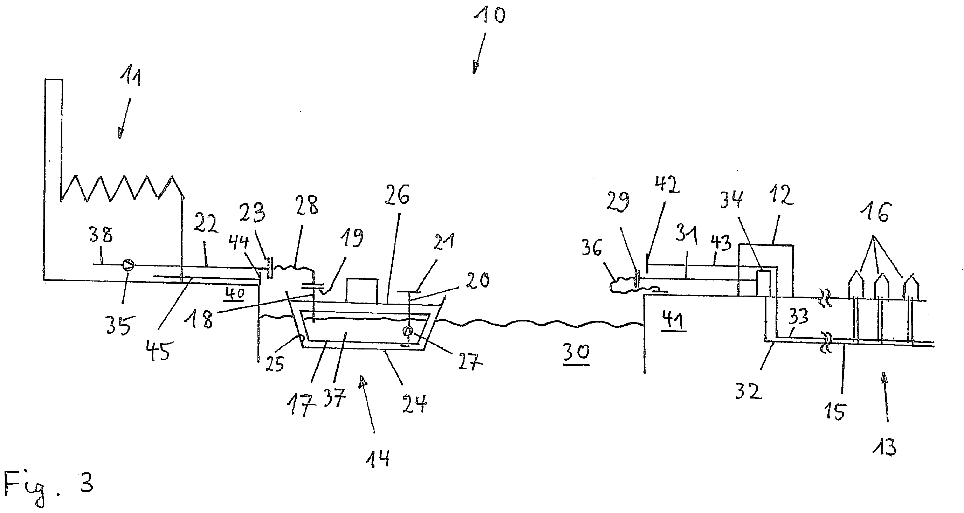

Bei der Ausführungsform gemäß Fig. 3 wird Wärmemedium 37 in beiden Richtungen von der Anlage 11 zu dem Wärmeabnehmer 12 und zurück transportiert. Zu diesem Zweck ist an dem annahmeseitigen Anleger 41 ein Rücklaufanschluss 42 vorgesehen, der über eine Verbindungsleitung 43 mit dem Rücklauf 33 des Fernwärmenetzes 13 verbunden ist. An dem abgabeseitigen Anleger 40 ist ebenfalls ein Rücklaufanschluss 44 vorgesehen, der mit einer Verbindungsleitung 45 zum Abführen des Rücklaufmediums verbunden ist. Das Rücklaufmedium kann beispielsweise in der Anlage 11 wieder mittels eines Wärmetauschers 39 erhitzt werden, so dass ein Kreislauf entsteht und die in dem Rücklauf enthaltene Wärme genutzt werden kann. An dem abgabeseitigen Anleger 41 können die Entnahme des heißen Vorlaufmediums und die Aufnahme des warmen Rücklaufmediums zeitlich nacheinander oder gleichzeitig, beispielsweise unter Verwendung zweier Tankschiffe 14, geschehen. Ebenso können an dem aufnahmeseitigen Anleger 40 die Entnahme des warmen Rücklaufmediums und die Aufnahme des heißen Vorlaufmediums zeitlich nacheinander oder gleichzeitig, beispielsweise unter Verwendung zweier Tankschiffe 14, geschehen.

## Patentansprüche

1. Verfahren zur Nutzung von in einer Anlage (11) anfallender Wärme, wobei die Wärme in einen Laderaum (17) eines schwimmenden Transportmittels (14) übertragen, mittels des schwimmenden Transportmittels (14) von der Anlage (11) zu einem Wärmeabnehmer (12) verschifft, aus dem Laderaum (17) des schwimmenden Transportmittels (14) entnommen und zu dem Wärmeabnehmer (12) übertragen wird, wobei die Wärme unter Nutzung von mindestens einem Wärmemedium (37) verschifft wird, wobei als schwimmendes Transportmittel (14) ein Tankschiff mit einem Tankraum als Laderaum (17), der aus mindestens einem als Teil des Tankschiffs (14) fest eingebauten Tank besteht, verwendet wird, wobei das Tankschiff (14) mindestens einen Anschluss (19, 21) zum Befüllen und/oder Entladen des Tankraums (17) umfasst, wobei das Wärmemedium (37) über den mindestens einen Anschluss (19, 21) in den Trankraum (17) des Tankschiffs eingefüllt und aus dem Tankraum (17) des Tankschiffs entladen wird, **dadurch gekennzeichnet, dass** das Wärmemedium (37) in den Trankraum (17) des unbeladenen Tankschiffs eingefüllt wird, wobei das Wärmemedium (37) Wasser ist, und wobei das Wärmemedium (37) eine Temperatur von mindestens 40 °C aufweist.

2. Verfahren nach Anspruch 1, **dadurch gekennzeichnet, dass** das Wärmemedium (37) eine Temperatur von mindestens 80 °C aufweist.

3. Verfahren nach einem der vorangehenden Ansprüche, **dadurch gekennzeichnet, dass** der Wärmeabnehmer (12) ein Wärmenetz oder Teil eines Wärmenetzes (13) ist.

4. Verfahren nach einem der vorangehenden Ansprüche, **dadurch gekennzeichnet, dass** das schwimmende Transportmittel (14) eine Wärmedämmung aufweist.

5. Verfahren nach Anspruch 4, **dadurch gekennzeichnet, dass** die Wärmedämmung so dimensioniert ist, dass das Wärmemedium (37) über einen Zeitraum von einer Stunde um nicht mehr als ein Grad Celsius abkühlt.

6. Verfahren nach einem der vorangehenden Ansprüche, **dadurch gekennzeichnet, dass** das schwimmende Transportmittel (14) einen Außenrumpf (24) und eine an der Innenseite des Außenrumpfes (24) angeordnete Innenschale (25) aufweist.

7. Verfahren nach Anspruch 6, **dadurch gekennzeichnet, dass** der Zwischenraum zwischen dem Außenrumpf (24) und der Innenschale (25) mit einem Isolationsmittel verfüllt oder evakuiert ist.

8. Verfahren nach Anspruch 7, **dadurch gekennzeichnet, dass** das Isolationsmittel Granulat beispielsweise aus Polystyrol, Polyurethan, Mineralwolle, Steinwolle, Perlit, Kork, Paraffin und/oder Aerogel umfasst.

## Claims

1. Method for using heat generated in a plant (11), wherein the heat is transferred into a hold (17) of a floating means of transport (14), shipped by means of the floating means of transport (14) from the plant (11) to a heat consumer (12), removed from the hold (17) of the floating means of transport (14) and transferred to the heat consumer (12), wherein the heat is shipped using at least one heating medium (37), wherein a tanker having a tank chamber as the hold (17), which consists of at least one tank which is fixed as part of the tanker (14), is used as the floating means of transport (14), wherein the tanker (14) comprises at least one connection (19, 21) for filling and/or discharging the tank chamber (17), wherein the heating medium (37) is introduced into the tank chamber (17) of the tanker and discharged from the tank chamber (17) of the tanker by means of the at least one connection (19, 21), **characterised in that** the heating medium (37) is introduced into the tank chamber (17) of the unloaded tanker, wherein the heating medium (37) is water, and wherein the heating medium (37) has a temperature of at least 40°C.

2. Method according to Claim 1, **characterised in that** the heating medium (37) has a temperature of at least 80°C.

3. Method according to any one of the preceding claims, **characterised in that** the heat consumer (12) is a heating network or part of a heating network (13).

4. Method according to any one of the preceding claims, **characterised in that** the floating means of transport (14) has thermal insulation.

5. Method according to Claim 4, **characterised in that** the thermal insulation is dimensioned such that the heating medium (37) does not cool down by more than one degree Celsius over a period of one hour.

6. Method according to any one of the preceding claims, **characterised in that** the floating means of transport (14) has an outer hull (24) and an inner shell (25) arranged on the inside of the outer hull (24).

7. Method according to Claim 6, **characterised in that** the intermediate space between the outer hull (24) and the inner shell (25) is filled with an insulation material or evacuated.

8. Method according to Claim 7, **characterised in that** the insulation material comprises granules made of, for example, polystyrene, polyurethane, mineral wool, rock wool, perlite, cork, paraffin and/or aerogel.

## Revendications

1. Procédé d'utilisation de la chaleur générée dans une installation (11), la chaleur étant transférée dans une cale (17) d'un moyen de transport flottant (14), transportée par voie maritime de l'installation (11) à un consommateur de chaleur (12) au moyen du moyen de transport flottant (14), extraite de la cale (17) du moyen de transport flottant (14) et transférée au consommateur de chaleur (12), la chaleur étant transportée par voie maritime en utilisant au moins un milieu caloporteur (37), un navire-citerne doté d'une cale à liquides en guise de cale (17), qui se compose d'au moins une citerne installée à demeure comme faisant partie du navire-citerne (14), étant utilisé comme moyen de transport flottant (14), le navire-citerne (14) comprenant au moins un raccordement (19, 21) pour le remplissage et/ou la décharge de la cale à liquides (17), le milieu caloporteur (37) étant rempli dans la cale à liquides (17) du navire-citerne et déchargé de la cale à liquides (17) du navire-citerne par le biais de l'au moins un raccordement (19, 21), **caractérisé en ce que** le milieu caloporteur (37) est rempli dans la cale à liquides (17) du navire-citerne lège, le milieu caloporteur (37) étant de l'eau, et le milieu caloporteur (37) présentant une température d'au moins 40 °C.

2. Procédé selon la revendication 1, **caractérisé en ce que** le milieu caloporteur (37) présente une température d'au moins 80 °C.

3. Procédé selon l'une des revendications précédentes, **caractérisé en ce que** le consommateur de chaleur (12) est un réseau de chaleur ou une partie d'un réseau de chaleur (13).

4. Procédé selon l'une des revendications précédentes, **caractérisé en ce que** le moyen de transport flottant (14) comporte une isolation thermique.

5. Procédé selon la revendication 4, **caractérisé en ce que** l'isolation thermique est dimensionnée de telle manière que le milieu caloporteur (37) ne refroidit pas de plus d'un degré Celsius sur une période d'une heure.

6. Procédé selon l'une des revendications précédentes, **caractérisé en ce que** le moyen de transport flottant (14) comporte un corps extérieur (24) et une coque intérieure (25) disposée sur le côté intérieur du corps extérieur (24).

7. Procédé selon la revendication 6, **caractérisé en ce que** l'espace intermédiaire entre le corps extérieur (24) et la coque intérieure (25) est rempli avec un moyen isolant ou vidé de son air.

8. Procédé selon la revendication 7, **caractérisé en ce que** le moyen isolant comprend des granulés, par exemple en polystyrène, en polyuréthane, en laine minérale, en laine de roche, en perlite, en liège, en paraffine et/ou en aérogel.
